# EUROPÄISCHE PATENTSCHRIFT

(11) **EP 2 242 732 B1**
(45) Veröffentlichungstag und Bekanntmachung des Hinweises auf die Patenterteilung: **15.08.2018**
(21) Anmeldenummer: 09709722.4
(22) Anmeldetag: 12.01.2009
(51) Int. Cl.: C04B 24/26, C08F 220/06, C08F 216/12, C08F 220/08, C08F 220/64, C08F 220/66, C08F 222/02, C08F 222/04, C08F 222/06, C08F 222/16, C08F 290/06, C08L 33/02

(54) **KONTINUIERLICH BETRIEBENES VERFAHREN ZUR HERSTELLUNG VON COPOLYMEREN**
CONTINUOUS METHOD FOR PRODUCING COPOLYMERS
PROCÉDÉ CONTINU DESTINÉ À LA FABRICATION DE COPOLYMÈRES

(30) Priorität: 13.02.2008 EP 08101598
(43) Veröffentlichungstag der Anmeldung: 27.10.2010
(73) Patentinhaber: Construction Research & Technology GmbH, 83308 Trostberg (DE)
(72) Erfinder: SCHWEDE, Christian, 69469 Weinheim (DE); VIERLE, Mario, 83512 Wasserburg (DE); MANGEL, Timo, 76470 Ötigheim (DE); ALBRECHT, Gerhard, 83209 Prien (DE); HERZOG, Volker, 64297 Darmstadt (DE); ARLT, Klaus, 46499 Hamminkeln (Ortsteil Brünen) (DE)
(74) Vertreter: BASF IP Association
(86) Internationale Anmeldenummer: PCT/EP2009/050260
(87) Internationale Veröffentlichungsnummer: WO 2009/100956

(56) Entgegenhaltungen:
- EP-A- 1 528 071
- EP-A- 1 690 877
- WO-A-01/07494
- WO-A-2004/087602
- WO-A-2004/094336
- WO-A-2005/019288

## Beschreibung

Die vorliegende Erfindung betrifft ein Verfahren zur Herstellung eines Copolymers.

Es ist bekannt, dass man wässrige Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, Feststoffagglomerate aufzubrechen, die gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement, Kalk, Gips oder Anhydrid enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel werden in der Praxis insbesondere Copolymere eingesetzt, welche durch radikalische Copolymerisation von Säuremonomeren mit Polyethermakromonomeren hergestellt werden. Üblicherweise erfolgt die Copolymerisation entweder in der Batch- oder in der Semi-Batch-Fahrweise.

EP 1 690 877 A1 beschreibt eine Methode zur Herstellung eines Zusatzmittels für Zement, wobei ein ungesättigtes Polyalkylenglykolether basiertes Monomer (A) und ein ungesättigtes organisches Monomer (B) copolymerisiert werden. Das ungesättigte Polyalkylenglykolether basierte Monomer (A) wird vorab in den Reaktor gegeben und das ungesättigte organische Monomer (B) wird dazu gegeben, wobei die Zugaberate des Monomers (B) wenigstens einmal geändert wird.

Die EP-B-1 218 427 beschreibt ein kontinuierliches Herstellungsverfahren für besagte Copolymere, die als Fließmittel/Wasserreduzierungsmittel eine bessere Performance zeigen sollen als entsprechende Copolymere, die mit der Batch- bzw. Semi-Batch-Betriebsweise hergestellt worden sind. Gemäß dem in der EP-B-1 218 427 beschriebenen kontinuierlichen Herstellungsverfahren wird zunächst ein Monomerstrom hergestellt, welcher einerseits ein Säuremonomer und andererseits ein Polyethermakromonomer enthält. Dieser vorab erzeugte, Säuremonomer und Polyethermakromonomer enthaltende Monomerstrom wird mit einem Initiatorstrom in einer Reaktionszone polymerisiert, wobei schließlich ein Polymerstrom aus der Reaktionszone zurückgezogen wird.

Es konnte festgestellt werden, dass die zur Herstellung des Monomerstroms erfolgte Vormischung des Säuremonomers und des Polyethermakromonomers Nachteile hat. Dies begründet sich u. a. dadurch, dass in dem Monomerstrom Säuremonomer und Polyethermakromonomer miteinander unerwünschte Nebenreaktionen eingehen. Beispielsweise zeigt das Polyethermakromonomer" ethoxylierter Hydroxyvinylbutylether" zusammen mit dem Säuremonomer" Acrylsäure" unterhalb von einem pH-Wert von ca. 7 (betrifft die zugrunde liegenden Polymerisationsbedingungen) erhebliche Hydrolysenebenreaktionen. Es hat sich gezeigt, dass die Nebenreaktionen im Ergebnis die Qualität des erhaltenen Copolymerdispergiermittels deutlich verschlechtern. Weiterhin erfordert die Erzeugung des Monomerenstroms in der großtechnischen Praxis die Bereitstellung einer effektiven Vormischeinrichtung, welche Säuremonomer sowie Polyethermakromonomer bereits vor der Hinzuführung des Initiators miteinander innig vermischt.

Die der vorliegenden Erfindung zugrunde liegende Aufgabe ist es somit, ein wirtschaftliches Verfahren zur Herstellung von Copolymeren bereit zu stellen, welche als Dispergiermittel für hydraulische Bindemittel, speziell als Fließmittel/Wasserreduktionsmittel, eine gute Performance zeigen.

Die Lösung dieser Aufgabe ist ein Verfahren zur Herstellung eines Copolymers in kontinuierlicher Betriebsweise in einer Polymerisationseinrichtung, enthaltend einen Zuführungsleitungen sowie einen Abfluss aufweisenden Polymerisationsreaktor, wobei durch die Zuführungsleitungen radikalischer Polymerisationsinitiator sowie Säuremonomer und Polyethermakromonomer als monomere Ausgangsstoffe in den Polymerisationsreaktor eingeleitet werden, in dem Polymerisationsreaktor auf -20 bis +120 °C temperierte Initiator, monomere Ausgangsstoffe, sowie Copolymer enthaltende Reaktionskomposition vorliegt, Copolymer enthaltende Reaktionskomposition durch den Abfluss aus dem Polymerisationsreaktor ausgeleitet wird, wobei die Einleitung des Polyethermakromonomers in den Polymerisationsreaktor in der Weise getrennt von der des Säuremonomers erfolgt, dass das Polyethermakromonomer in dem Polymerisationsreaktor mit der Initiator, monomere Ausgangsstoffe sowie Copolymer enthaltenden Reaktionskomposition vermischt wird und dabei erstmals mit dem Säuremonomer in Kontakt gerät.

Als Säuremonomer sollen radikalisch copolymerisierbare, mindestens eine Kohlenstoffdoppelbindung aufweisenden Monomere verstanden werden, welche mindestens eine Säurefunktion enthalten und im wässrigen Medium als Säure reagieren. Weiterhin sollen als Säuremonomer auch radikalisch copolymerisierbare, mindestens eine Kohlenstoffdoppelbindung aufweisenden Monomere verstanden werden, welche aufgrund von Hydrolysereaktion im wässrigen Medium mindestens eine Säurefunktion ausbilden und im wässrigen Medium als Säure reagieren (Beispiel: Maleinsäureanhydrid). Polyethermakromonomere im Sinne der vorliegenden Erfindung sind radikalisch copolymerisierbare Verbindungen mit mindestens einer Kohlenstoffdoppelbindung, welche mindestens zwei Ether-Sauerstoffatome aufweisen und zwar mit der Maßgabe, dass die in dem Copolymer enthaltenen Polyethermakromonomerstruktureinheiten Seitenketten aufweisen, die mindestens zwei Ether-Sauerstoffatome enthalten.

Wesentlich bei dem vorstehend beschriebenen Verfahren ist, dass das Säuremonomer erst im Polymerisationsreaktor mit dem Polyethermakromonomer in Kontakt gerät, und zwar in Anwesenheit des Polymerisationsinitiators. Dies bedeutet, dass Nebenreaktionen zwischen Säuremonomer und Polyethermakromonomer im Vorfeld der Copolymerisation vermieden werden, da das erstmalige Inkontaktbringen von Säuremonomer und Polyethermakromonomer in Anwesenheit des Polymerisationsinitiators unter Polymerisationsbedingungen erfolgt. Auf diese Weise können vielfach in erheblichem Maße unerwünschte Nebenreaktionen (z.B. Hydrolysereaktionen) zwischen Säuremonomer und Polyethermakromonomer zurückgedrängt werden. Die erhaltenen Copolymer-Fließmittel, welche mit dem erfindungsgemäßen Verfahren hergestellt werden, zeigen eine gute Performance als Fließmittel/Wasserreduktionsmittel, bzw. als Dispergiermittel für hydraulische Bindemittel.

Ein weiterer wesentlicher Vorteil des erfindungsgemäßen Verfahrens begründet sich darin, dass keine Einrichtung zur Vormischung des Säuremonomers mit dem Polyethermakromonomer erforderlich ist, deren Bereitstellung insbesondere für den großtechnischen Maßstab einen nicht unbeträchtlichen wirtschaftlichen Aufwand bedeuten würde. In dem erfindungsgemäßen Verfahren erfolgt die Durchmischung der beiden Monomere hingegen in der Reaktionskomposition, z. B. mit Hilfe einer Rührvorrichtung, mit welcher der Polymerisationsreaktor häufig ausgestattet ist.
In einer bevorzugten Ausführungsform der Erfindung wird das Säuremonomer durch Polymerisation umgesetzt und dadurch eine Struktureinheit im Copolymer erzeugt, die gemäß einer der allgemeinen Formeln (Ia), (Ib), (Ic) und/oder (Id) ist 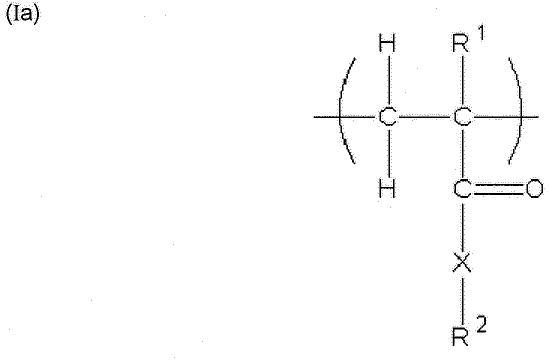 mit
R¹ gleich oder verschieden (d.h. innerhalb des Copolymers entweder gleich oder verschieden substituiert) sowie repräsentiert durch H und/ oder eine unverzweigte oder verzweigte C₁ - C₄ Alkylgruppe (bevorzugt H oder CH₃);
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 (bevorzugt NH-C₄H₈) und/oder durch eine nicht vorhandene Einheit (d.h., dass -X nicht vorhanden ist);
R² gleich oder verschieden sowie repräsentiert durch SO₃H, PO₃H₂, O-PO₃H₂ und/oder para substituiertes C₆H₄-SO₃H, oder falls X eine nicht vorhandene Einheit ist, R² durch OH repräsentiert wird; 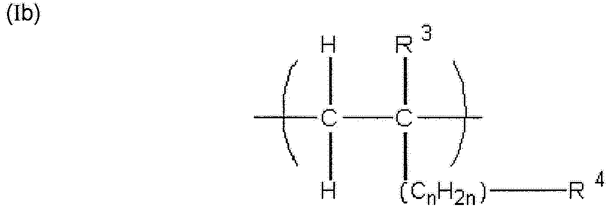
mit
R³ gleich oder verschieden sowie repräsentiert durch H und/oder eine unverzweigte oder verzweigte C₁ - C₄ Alkylgruppe (bevorzugt CH₃);
n = 0,1,2,3 oder 4
R⁴ gleich oder verschieden sowie repräsentiert durch SO₃H, PO₃H₂, O-PO₃H₂ und/oder para substituiert vorliegendes C₆H₄-SO₃H; 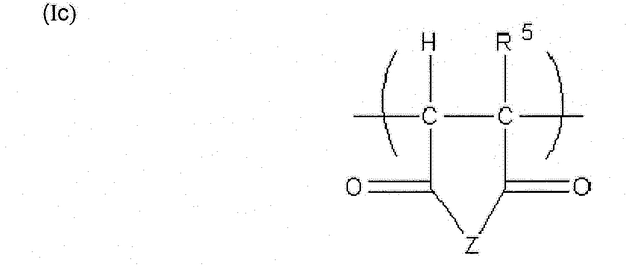
mit
R⁵ gleich oder verschieden sowie repräsentiert durch H und/oder eine unverzweigte oder verzweigte C₁ - C₄ Alkylgruppe (bevorzugt H);
Z gleich oder verschieden sowie repräsentiert durch O und/oder NH; 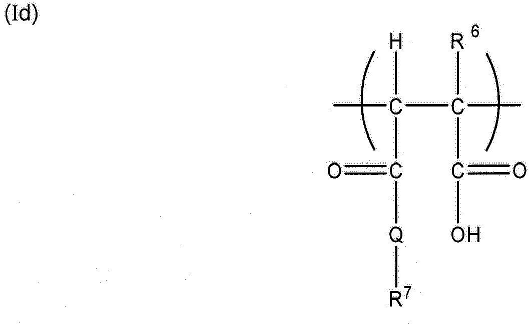
mit
R⁶ gleich oder verschieden sowie repräsentiert durch H und/oder eine unverzweigte oder verzweigte C₁ - C₄ Alkylgruppe (bevorzugt H);
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n = 0, 1, 2, 3 oder 4, (C₆H₄)-SO₃H, (C₆H₄)-PO₃H₂,
(C₅H₄)-OPO₃H₂ und/oder (CₘH₂ₘ)ₑ-O-(A'O)_{α}-R⁹ mit m = 0, 1, 2, 3 oder 4, e = 0, 1, 2, 3 oder 4, A' = C_{x'}H_{2x'} mit x' = 2, 3, 4 oder 5 (bevorzugt x' = 2) und/oder CH₂C(C₆H₅)H-, α = eine ganze Zahl von 1 bis 350 (bevorzugt α = 15 - 200) mit R⁹ gleich oder verschieden sowie repräsentiert durch eine unverzweigte oder verzweigte C₁ - C₄ Alkylgruppe (bevorzugt CH₃).

Bezüglich R², R⁴ und R⁷ in den Strukturformeln Ia, Ib und Id ist zu bemerken, dass die entsprechenden Säurefunktionen, insbesondere bei Zugabe von Basen, (im Polymer) deprotoniert vorliegen können (Salzbildung).

Die vorstehend und nachstehend benutzte Ausdrucksweise" gleich oder verschieden" soll jeweils Konstanz oder Variabilität innerhalb des durch das erfindungsgemäße Verfahren erzeugten Copolymers bedeuten.

In der Praxis wird als Säuremonomer häufig Methacrylsäure, Acrylsäure, Maleinsäure, Maleinsäureanhydrid, ein Halbester der Maleinsäure oder eine Mischung aus mehreren dieser Komponenten eingesetzt.

In einer bevorzugten Ausführungsform der Erfindung wird das Polyethermakromonomer durch Polymerisation umgesetzt und dadurch eine Struktureinheit im Copolymer erzeugt, die gemäß einer der allgemeinen Formeln (IIa), (IIb) und/oder (IIc) ist 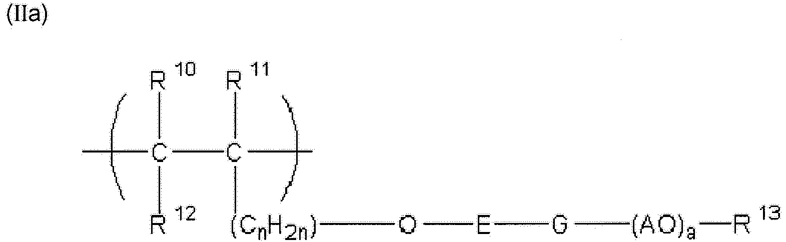 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe (bevorzugt H und/oder CH₃);
E gleich oder verschieden sowie repräsentiert durch eine unverzweigte oder verzweigte C₁ - C₆ Alkylengruppe (C₁, C₂, C₃, C₄, C₅ oder C₆ zwar jeweils typisch, jedoch bevorzugt C₂ und C₄), eine Cyclohexylgruppe, CH₂-C₆H₁₀, ortho, meta oder para substituiert vorliegendes C₆H₄ und/oder eine nicht vorhandene Einheit (d.h., dass -E nicht vorhanden ist);
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt (d.h., dass -G nicht vorhanden ist);
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350 (bevorzugt 10 - 200);
R¹³ gleich oder verschieden sowie repräsentiert durch H, eine unverzweigte oder verzweigte C₁ - C₄ Alkylgruppe, CO-NH₂, und/oder COCH₃ (bevorzugt H, CH₃); 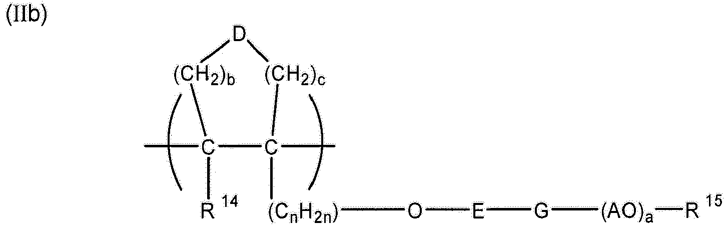
mit
R¹⁴ gleich oder verschieden sowie repräsentiert durch H und/oder eine unverzweigte oder verzweigte C₁ - C₄ Alkylgruppe (bevorzugt H);
E gleich oder verschieden sowie repräsentiert durch eine unverzweigte oder verzweigte C₁ - C₆ Alkylengruppe (bevorzugt C₂H₄), eine Cyclohexylgruppe, CH₂-C₆H₁₀, ortho, meta oder para substituiert vorliegendes C₆H₄ und/oder durch eine nichtvorhandene Einheit (d.h. -E ist nicht vorhanden);
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit (d.h. -G ist nicht vorhanden) vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350 (bevorzugt 10 - 200);
D gleich oder verschieden sowie repräsentiert durch eine nicht vorhandene Einheit (d.h. -D ist nicht vorhanden), NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und
mit der Maßgabe dass wenn D NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃ (bevorzugt H); 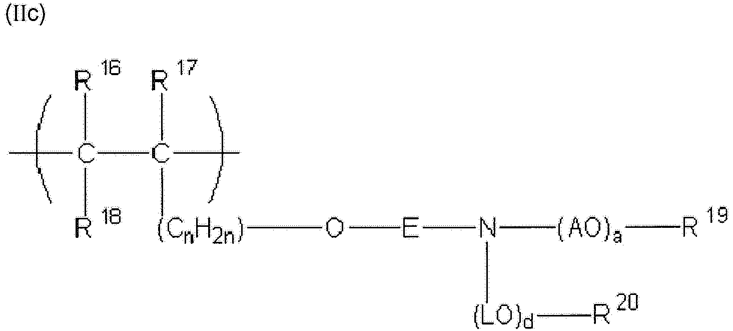
mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe (bevorzugt H und/oder CH₃);
E gleich oder verschieden sowie repräsentiert durch eine unverzweigte oder verzweigte C₁ - C₆ Alkylengruppe (bevorzugt C₂H₄ oder C₄H₈), eine Cyclohexylgruppe, CH₂-C₆H₁₀, ortho, meta oder para substituiert vorliegendes C₆H₄ und/oder durch eine nicht vorhandene Einheit (d.h. -E ist nicht vorhanden);
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 (bevorzugt x = 2) und/oder CH₂-CH(C₆-H₅);
a gleich oder verschieden sowie repräsentiert durch eine ganze Zahl von 2 bis 350 (bevorzugt 10 - 200);
d gleich oder verschieden sowie repräsentiert durch eine ganze Zahl von 1 bis 350 (bevorzugt 10 - 200);
R¹⁹ gleich oder verschieden sowie repräsentiert durch H und/oder eine unverzweigte oder verzweigte C₁ - C₄ Alkylgruppe (bevorzugt H),
R²⁰ gleich oder verschieden sowie repräsentiert durch H und/oder eine unverzweigte C₁ - C₄ Alkylgruppe (bevorzugt H).

Allgemein kann gesagt werden, dass die Poly-Alkoxyseitenketten (AO)ₐ der Polyethermakromonomere zwar meist reine Poly-Ethoxyseitenketten sind, wobei jedoch nicht selten auch gemischte Poly-Alkoxyseitenketten, insbesondere solche, die sowohl Propoxy- als auch Ethoxy-Gruppen enthalten, vorliegen.

In der Praxis wird häufig als Polyethermakromonomer alkoxyliertes Isoprenol (alkoxyliertes 3-Methyl-3-buten-1-ol) und/oder alkoxylierter Hydroxybutylvinylether und/oder alkoxylierter (Meth)allylalkohol (Allylalkohol bevorzugt gegenüber Methallylalkohol) mit normalerweise jeweils einer arithmethisch mittleren Zahl an Oxyalkylengruppen von 4 bis 350 eingesetzt. Besonders bevorzugt ist alkoxylierter Hydroxybutylvinylether.

Neben dem Säuremonomer und dem Polyethermakromonomer können noch weitere Monomertypen zum Einsatz kommen. Dies wird dann in der Regel so in die Praxis umgesetzt, dass als monomerer Ausgangsstoff eine vinylisch ungesättigte Verbindung in den Polymerisationsreaktor eingeleitet wird, welche durch Polymerisation umgesetzt wird und dadurch eine Struktureinheit im Copolymer erzeugt, die gemäß der allgemeinen Formeln (IIIa) und/oder (IIIb) vorliegt 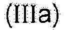 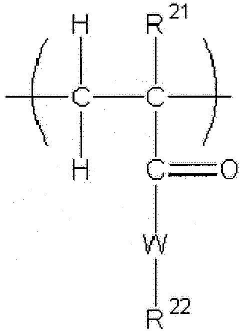 mit
R²¹ gleich oder verschieden sowie repräsentiert durch H und/oder eine unverzweigte oder verzweigte C₁ - C₄ Gruppe (bevorzugt H oder CH₃);
W gleich oder verschieden sowie repräsentiert durch O und/oder NH;
R²² gleich oder verschieden sowie repräsentiert durch eine verzweigte oder unverzweigte C₁ - C₅-Monohydoxyalkylgruppe (C₁, C₂, C₃, C₄ oder C₅ ist zwar jeweils typisch, bevorzugt ist jedoch C₂ und/oder C₃); 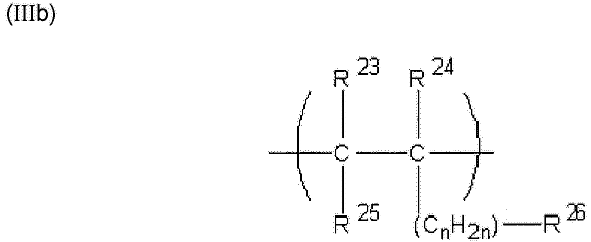
mit
R²³, R²⁴ und R² jeweils gleich oder verschieden sowie jeweils unabhängig repräsentiert durch H und/oder eine unverzweigte oder verzweigte C₁ - C₄ Alkylgruppe (bevorzugt H und/oder CH₃);
n gleich oder verschieden sowie repräsentiert durch 0, 1, 2, 3 und/oder 4;
R²⁶ gleich oder verschieden sowie repräsentiert durch (C₆H₅), OH und/oder OCOCH₃.

Typische Monomere, welche durch Polymerisation die Struktureinheiten (IIIa) oder (IIIb) erzeugen sind beispielsweise 2-Hydroxypropylacrylat, Isoprenol oder Allylalkohol. Als weiteres typisches Monomer wäre in diesem Zusammenhang noch Hydroxybutylvinylether zu nennen.

Normalerweise werden insgesamt mindestens 45 Mol %, bevorzugt jedoch mindestens 80 Mol % aller Struktureinheiten des durch das Verfahren erzeugten Copolymers durch Polymerisation von Säuremonomer und Polyethermakromonomer erzeugt.

In einer bevorzugten Ausführungsform wird soviel Polyethermakromonomer pro Mol Säuremonomer in den Polymerisationsreaktor eingeleitet, dass sich im gebildeten Copolymer ein arithmetisch mittleres molares Verhältnis von Säuremonomerstruktureinheiten zu Polyethermakromonomerstruktureinheiten von 20 : 1 bis 1 : 1, bevorzugt von 12 : 1 bis 1 : 1 einstellt.

In der Regel wird als radikalischer Polymerisationsinitiator ein Redoxinitiator eingesetzt. Meist wird dann als Redoxinitiator das System H₂O₂/FeSO₄ gewählt, bevorzugt zusammen mit einem Reduktionsmittel. Als Reduktionsmittel kommen in Betracht Natriumsulfit, das Dinatriumsalz der 2-Hydroxy-2-sulfinatoessigsäure, das Dinatriumsalz der 2-Hydroxy-2-sulfonatoessigsäure, Natriumhydroxymethansulfinat, Ascorbinsäure, Iso-Ascorbinsäure oder Mischungen davon. Als das Redox-Initiatorsystem kommen auch andere Systeme in Frage, z.B. solche die auf t-Butylhydroperoxid, Ammonium- oder Kaliumperoxidisulfat basieren.

In einer weniger bevorzugten Ausführungsform werden Initiatorkomponenten, z.B. H₂O₂, und das Polyethermakromonomer in vorgemischter Form in einem Strom in den Polymerisationsreaktor eingeleitet.

Grundsätzlich können jedoch als Initiatoren sämtliche unter Polymerisationsbedingungen in Radikale zerfallende Verbindungen wie z.B. Peroxide, Hydroperoxide, Persulfate, Azoverbindungen und Perphosphate eingesetzt werden. In Kombination der Radikalbildner mit geeigneten Reduktionsmitteln erhält man bekannte Redoxsysteme bzw. Redoxkatalysatoren. Geeignete Reduktionsmittel sind beispielsweise Natriumsulfit, das Dinatriumsalz der 2-Hydroxy-2-sulfonatoessigsäure, das Dinatriumsalz der 2-Hydroxy-2-sulfinatoessigsäure, Natriumhydroxymethansulfinat, Ascorbinsäure, Iso-Ascorbinsäure, Amine wie Diethanolamin oder Triethanolamin, Hydroxylamin oder Mischungen davon. Zweckmäßigerweise setzt man bei Verwendung von Redoxsystemen bzw. Katalysatoren zusätzlich wasserlösliche Salze von Übergangsmetallen wie Eisen, Kobalt, Nickel oder Silber ein, bevorzugt werden hierbei Eisensalze verwendet.
Meist wird ein Kettenregler, welcher bevorzugt in gelöster Form vorliegt, in den Polymerisationsreaktor eingeleitet.
Die monomeren Ausgangsstoffe und/oder der Initiator können in Form ihrer wässrigen Lösungen in den Polymerisationsreaktor eingeleitet werden.
Bevorzugt liegt der Polymerisationsreaktor als kontinuierlich betriebener Rührkessel vor.
Häufig weist die Polymerisationseinrichtung noch mindestens einen dem Polymerisationsreaktor nachgeschalteten, kontinuierlich betriebenen Reaktor auf, in welchem über den Abfluss des Polymerisationsreaktors die Copolymer enthaltende Reaktionskomposition eingeleitet wird. In den nachgeschalteten Reaktor können dann monomere Ausgangsstoffe und/oder Initiatorkomponenten eingeleitet werden.

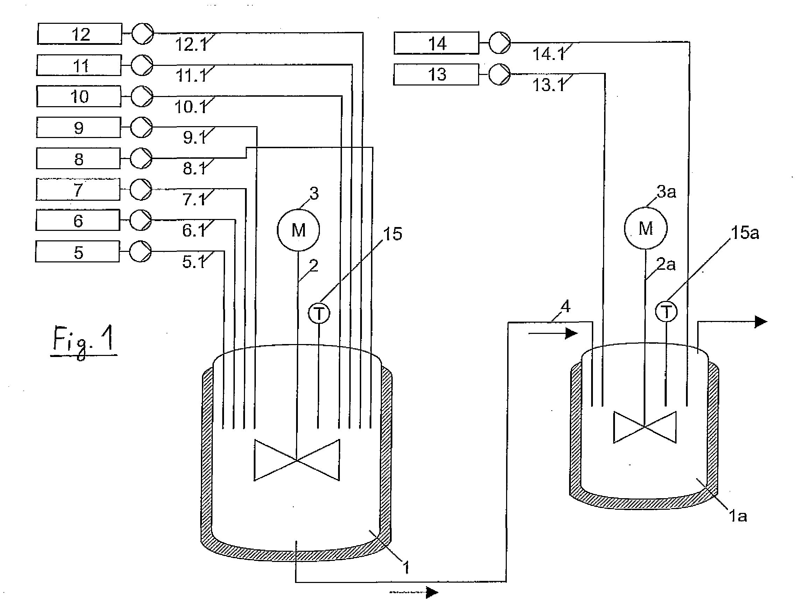

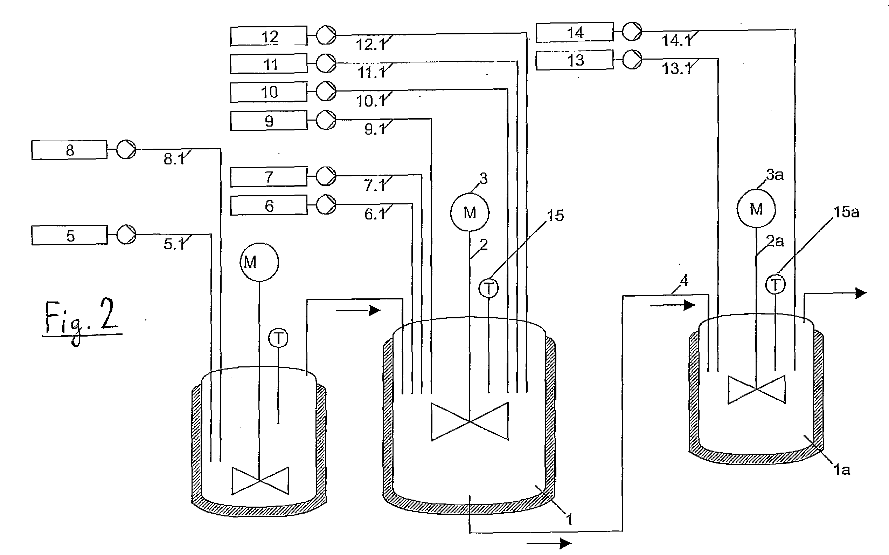

Im Folgenden soll die Erfindung anhand von Ausführungsbeispielen näher beschrieben werden.
Zur Veranschaulichung der Ausführungsbeispiele zeigt die Zeichnung in Fig. 1 einen schematischen Anlagenaufbau zur Durchführung des erfindungsgemäßen Verfahrens, sowie in Fig. 2 ein entsprechendes Vergleichsschema zur Durchführung eines Verfahrens, welches nicht gemäß der Erfindung ist.

### Beschreibung der eingesetzten Polymerisationseinrichtung:

Ein Beispiel einer typischen im Labormaßstab ausgelegten Produktionsanlage für die kontinuierliche Produktion der beschriebenen Copolymere ist in Fig. 1 schematisch dargestellt. Die Reaktionseinheit besteht aus zwei doppelwandigen Reaktoren (1 und 1a), beide ausgestattet mit Rührvorrichtungen (2 und 2a) und Motoren (3 und 3a). Das Gesamtvolumen der Reaktoren beträgt 0,657 dm³ (Reaktor 1) und 0,311 dm³ (Reaktor 1a). Die Reaktoren sind mit einer Rohrleitung verbunden (4).

Reaktor (1) ist durch Zuleitungen mit den Vorratsgefäßen der Reaktanden verbunden. Mittels zwischengeschalteter Pumpen kann ein definierter Stoffstrom eingestellt werden. Der Anlagenaufbau enthält die folgenden Vorratsgefäße (Verschließbare Glasbehälter mit Magnetrührvorrichtung): (5) für die Vinyletherkomponente (das Polyethermakromonomer); (6) für eine wässrige Basenlösung zur Einstellung des in der Reaktion benötigten pH-Wertes, (7) für H₂O, (8) für das Säuremonomer 2-Propensäure (Acrylsäure), (9) für die Kettenübertragungskomponente, (10) für die erste Initiatorkomponente, (11) für die zweite Initiatorkomponente und (12) für die dritte Initiatorkomponente. Die Zuleitungsrohre der Vorratsgefäße (5.1, 6.1, 7.1, 8.1, 9.1, 10.1, 11.1 und 12.1) führen durch den Reaktordeckel in den Reaktor und das Reaktionsmedium, wobei die Eindringtiefe in das Reaktionsmedium so gewählt ist, dass die Dosierung in eine Zone mit hoher Durchmischungseffizienz erfolgt. Zur Gewährleistung der Verhinderung einer Vorvermischung von Säuremonomer und Polyethermakromonomer wird ein maximaler Abstand der Zuleitungen 5.1 und 8.1 am Reaktor gewählt. Reaktor (1a) ist ebenfalls durch Zuleitungen (13.1 und 14.1) mit den Vorratsgefäßen (13) und (14) (Volumen jeweils 5,00 dm³) für Reaktanden verbunden. Mittels ebenfalls zwischengeschalteter Pumpen kann ein definierter Stoffstrom eingestellt werden. Weiterhin enthält der Anlagenaufbau folgende Komponenten: (13) für H₂O oder eine wässrige Basenlösung und (14) für die zweite Initiatorkomponente. Reaktor 1 und 1a enthalten jeweils noch eine Temperatursonde (15 und 15a).

### Herstellungsbeispiele:

### Beispiel 1: Gemäß Erfindung: Herstellung eines Polymers ohne Vormischung der Monomerkomponenten

Die Apparatur wird zu Beginn mit Wasser gespült und die Reaktoren 1 und 1a mit Wasser geflutet. In Vorratsgefäß 5 werden 4,478 kg H₂O vorgelegt und unter Rühren 0,022 kg einer wässrigen KOH-Lösung (20 Gew.-%) sowie als Polyethermakromonomer 4,500 kg Vinyloxybutylpoly(ethylenoxid) mit einer zahlenmittleren Molmasse von 6000 g·mol⁻¹ zugegeben. Die Lösung wird bis zur vollständigen Auflösung des Vinyloxybutylpoly(ethylenoxid)s gerührt. Vorratsgefäß 6 wird mit 0,100 kg einer wässrigen KOH-Lösung (20 Gew.-%) befüllt, Vorratsgefäß 7 mit 0,100 kg entionisiertem Wasser. In Vorratsgefäß 8 werden 0,420 kg H₂O vorgelegt und unter Rühren 0,280 kg des Säuremonomers 2-Propensäure (Acrylsäure) eingetragen. Vorratsgefäß 9 wird mit 0,500 kg einer 8%-igen Lösung von 3-MPS (3-Mercaptopropansäure) befüllt, Vorratsgefäß 10 mit einer 5 %igen H₂O₂ Lösung. In Vorratsgefäß 11 werden 0,235 kg Wasser vorgelegt, unter Rühren 0,015 kg Brüggolit® FF6 M (Brüggolit® FF6 M ist ein Gemisch aus Natriumsulfit, Dinatriumsalz der 2-Hydroxy-2-sulfinatoessigsäure und Dinatriumsalz der 2-Hydroxy-2-sulfinatoessigsäure, beziehbar bei der BrüggemannChemical L. Brüggemann KG) zugegeben und bis zur vollständigen Auflösung gerührt. Vorratsgefäß 12 wird mit 0,150 kg einer wässrigen Lösung von FeSO₄·7H₂O (1,4 Gew.-%) befüllt. Vorratsgefäß 13 wird mit 0,100 kg entionisiertem Wasser, Vorratsgefäß 14 mit 0,150 kg einer Brüggolit® FF6 M-Lösung befüllt, die in analoger Weise zu der in Vorratsgefäß 11 eingefüllten hergestellt wurde.

Zu Beginn der Reaktion werden die beiden Rührer sowie alle Pumpen gestartet und Kühlwassermanteltemperatur so eingestellt, dass die Temperatur des Reaktionsmediums konstant 15 °C beträgt. Die Stoffströme der Reaktanden aus Vorratsgefäß 5, 8 und 9 werden entsprechend eingestellt, dass die Summe der mittleren Verweilzeiten 20 Minuten in Reaktor 1 und 10 Minuten in Reaktor 1a betragen. Die weiteren Stoffströme werden wie folgt eingestellt: KOH-Lösung (Vorratsgefäß 6): 0,008 kg·h⁻¹; H₂O (Vorratsgefäß 7): 0,006 kg·h⁻¹; Initiatorkomponenten 10, 11 und 12: 0,030 kg·h⁻¹; 0,036 kg·h⁻¹ und 0,020 kg·h⁻¹. Als Stoffströme der Reaktanden in Reaktor 1a werden eingestellt: H₂O (Vorratsgefäß 13): 0,006 kg·h⁻¹ und Initiatorkomponente 2 (Vorratsgefäß 14): 0,006 kg·h⁻¹. Es ist gewährleistet, dass die Einleitung des Polyethermakromonomers in den Polymerisationsreaktor in der Weise getrennt von der des Säuremonomers erfolgt, dass das Polyethermakromonomer in dem Polymerisationsreaktor mit der Initiator, monomere Ausgangsstoffe sowie Copolymer enthaltenden Reaktionskomposition vermischt wird und dabei erstmals mit dem Säuremonomer in Kontakt gerät. Nach Einstellen der Stoffströme wird in Zeitabständen, die der Summe der mittleren Verweilzeiten der Reaktoren entsprechen jeweils eine Probe entnommen und per Größenausschlusschromatographie analysiert. Der stationäre Zustand des Versuchs ist dann erreicht, wenn sich die Form des Gelchromatographieelutionsdiagramms (GPC-Diagramms) und die ermittelten Molmassenmittelwerte in Abhängigkeit von der Zeit nicht mehr ändern. Nach Erreichen des stationären Zustands wird eine für die Versuchsbedingungen repräsentative Probe entnommen (Polymer 1) und per Größenausschlusschromatographie analysiert und daraus die Molmassenverteilung und deren Mittelwerte sowie der Umsatz ermittelt. Am Ende der Reaktion werden alle Stoffströme auf Null gestellt und die Apparatur mit Wasser gespült.

### Vergleichsbeispiel 1: Herstellung eines Polymers unter Vormischung der Monomerkomponenten in einem Vorratsgefäß sowie Dosierung aus diesem Vorratsgefäß

In Vorratsgefäß 5 wird zunächst die wie in Beispiel 1 beschriebene Vinyloxybutylenpoly(ethylenglykol)-Lösung (Vinyloxybutylpoly(ethylenoxid)-Lösung) hergestellt und anschließend unter weiterem Rühren die in Beispiel 1 beschriebene Menge an Wasser und 2-Propensäure in Vorratsgefäß 5 eingemischt. Die Stoffströme werden analog zu den in Beispiel 1 beschrieben eingestellt. Die Versuchsdurchführung erfolgt analog Beispiel 1. Nach Erreichen des stationären Zustands des Versuchs durch ein, wie in Beispiel 1 beschriebenes Vorgehen, wird eine Probe entnommen (Polymer 2) und die Molmassenverteilung, deren Mittelwerte sowie der Umsatz mittels Größenausschlusschromatographie bestimmt.

### Vergleichsbeispiel 2: Herstellung eines Polymers unter Vormischung der Monomerkomponenten mittels einer Vormischeinheit (temperiert auf 25 °C)

Die Polymerisationsanlage im Labormaßstab wird durch den Einbau einer Vormischeinheit modifiziert (Fig. 2). Die Vormischeinheit besteht aus einem mittels Rührwerk durchmischten temperierbaren Behälter (mit einem Volumen von 0,55 dm³), der mit zwei Zuleitungen für die zu mischenden wässerigen Lösungen und einer Ableitung für die gemischte Lösung ausgestattet ist. Hierzu wird die Vormischeinheit in die Zuleitung 5.1 eingebaut und zusätzlich die Zuleitung 8.1 an die Vormischeinheit angeschlossen, so dass die Monomerkomponenten miteinander vermischt werden und mittels einer Zuleitung gemeinsam in den Reaktor dosiert werden.

Die Stoffströme werden analog zu denen in Beispiel 1 beschrieben eingestellt. Die Versuchsdurchführung erfolgt analog Beispiel 1, wobei zur Simulation der Raumtemperatur eine Temperatur im Vormischer von 25 °C eingestellt wird. Nach Erreichen des stationären Zustands des Versuchs durch ein, wie in Beispiel 1 beschriebenes Vorgehen, wird eine Probe entnommen (Polymer 3) und die Molmassenverteilung, deren Mittelwerte sowie der Umsatz mittels Größenausschlusschromatographie bestimmt.

### Vergleichsbeispiel 3: Herstellung eines Polymers unter Vormischung der Monomerkomponenten mittels einer Vormischeinheit (temperiert auf 35 °C)

Anlagenaufbau und Durchführung der Polymerisation analog zu Vergleichsbeispiel 2, wobei die Vormischeinheit auf 35 °C temperiert wurde. Nach Erreichen des stationären Zustands des Versuchs durch ein, wie in Beispiel 1 beschriebenes Vorgehen, wird eine Probe entnommen (Polymer 4) und die Molmassenverteilung, deren Mittelwerte sowie der Umsatz mittels Größenausschlusschromatographie bestimmt.

### Analyse der Copolymere aus Beispiel 1 und den Vergleichsbeispielen 1 bis 3:

Die Polymere aus Beispiel 1 und den Vergleichsbeispielen 1 bis 3 werden mittels Größenausschlusschromatographie bezüglich mittlere Molmasse und Umsatz analysiert (Säulenkombination: Suprema 1000 und Suprema 30 der Firma PSS, Mainz; Eluent: wässerige Lösung aus Na₂HPO₄ (0,03 mol/l) und 0,5 g/l Natriumazid; Injektionsvolumen 50 µl; Flussrate 0,8 ml/min). Die Kalibration zur Bestimmung der mittleren Molmasse erfolgte mit linearen Poly(ethylenoxid)standards. Als Maß für den Umsatz wird der Peak des Copolymers auf eine relative Höhe von 1 normiert und die Höhe des Peaks des nicht umgesetzten Makromomers/PEG-haltigen Oligomers als Maß für den Gehalt an Restmonomer verwendet.

Folgende Werte konnten ermittelt werden:

| Polymername | Restmonomer / Relative Höhe zum Polymerpeak | M̅_̅{̅W̅}̅ / g·mol⁻¹ |
|---|---|---|
| Polymer 1 (aus Beispiel 1) | 0,40 | 41.800 |
| Polymer 2 (aus Vergleichsbeispiel 1) | 2,25 | 10.700 |
| Polymer 3 (aus Vergleichsbeispiel 2) | 0,82 | 34.000 |
| Polymer 4 (aus Vergleichsbeispiel 3) | 1,30 | 26.000 |

Die unter Vormischung der Monomere hergestellten Polymere 2, 3 und 4 zeigen deutlich höhere Gehalte an nicht zum Polymer umgesetztes Makromonomer / Polyethylenglycol (PEG) haltigen Oligomers als Polymer 1, das mittels erfindungsgemäßer Dosierung der Komponenten in den Reaktor hergestellt wurde. Eine Vormischung der Komponenten resultiert also deutlich in einem höheren Hydrolysegrad und somit in einer Umsatzreduzierung.

### Anwendungstests

Die Polymere 1 bis 4 werden auf ihre Eigenschaften als Betonverflüssiger in einem geeigneten Testsystem untersucht. Hierzu werden zuvor alle Polymere mit einer Lösung von NaOH in Wasser (20 Gew.-%) auf einen pH-Wert von 6,5 ± 0,2 eingestellt und mit geringen Mengen eines konventionellen Entschäumers zur Steuerung des Luftporengehalts versetzt.

Bei der Durchführung der Tests werden zunächst 6,00 kg eines Zements CEM I 52,5 R; 9,41 kg Quarzsand und 19,17 kg Zuschläge 30 Sekunden lang trocken gemischt; 1,05 kg Wasser zugegeben und weitere 90 Sekunden gemischt. Anschließend werden erneut 1,05 kg Wasser und jeweils 8,40·10⁻³ kg Polymer (basierend auf dem Polymerfeststoffgehalt) zugegeben und weitere 90 Sekunden gemischt (entspricht einem Wasser/Zementverhältnis von 0,35 und einer Polymerdosierung von 0,14 % Feststoff bezogen auf die Zementeinwaage). Anschließend wird das Ausbreitmaß gemäß DIN EN 12350-5 direkt nach der Herstellung sowie nach 10 und 30 Minuten bestimmt. Folgende Werte wurden ermittelt:

| Polymer | Ausbreitmaß / cm | | | Bemerkung |
|---|---|---|---|---|
| | nach Herstellung | 10 Minuten | 30 Minuten | |
| Polymer 1 | 48,5 | 39 | 33,5 | bei 30 Minuten nicht mehr verarbeitbar |
| Polymer 2 | 37 | 34 | - | |
| Polymer 3 | 37,5 | 31 | - | |
| Polymer 4 | 33,5 | 33 | - | |

Das erfindungsgemäß hergestellte Polymer 1 zeigt bei gleicher Dosierung eine deutlich bessere Verflüssigungswirkung direkt nach Herstellung des Betons als die unter Vormischung hergestellten Polymere 2, 3 und 4. Weiterhin weist es eine deutlich bessere Konsistenzhaltung auf. Beton, der unter Verwendung der Polymere 2, 3 und 4 hergestellt wurde, ist nach 30 Minuten nicht mehr verarbeitbar. Somit führt die erfindungsgemäße Herstellung der Polymere zu Polymeren mit deutlich besseren Anwendungseigenschaften.

## Patentansprüche

1. Verfahren zur Herstellung eines Copolymers in kontinuierlicher Betriebsweise in einer Polymerisationseinrichtung, enthaltend einen Zuführungsleitungen sowie einen Abfluss aufweisenden Polymerisationsreaktor, wobei durch die Zuführungsleitungen radikalischer Polymerisationsinitiator sowie Säuremonomer und Polyethermakromonomer als monomere Ausgangsstoffe in den Polymerisationsreaktor eingeleitet werden, in dem Polymerisationsreaktor auf -20 bis +120 °C temperierte Initiator, monomere Ausgangsstoffe, sowie Copolymer enthaltende Reaktionskomposition vorliegt, Copolymer enthaltende Reaktionskomposition durch den Abfluss aus dem Polymerisationsreaktor ausgeleitet wird, wobei die Einleitung des Polyethermakromonomers in den Polymerisationsreaktor in der Weise getrennt von der des Säuremonomers erfolgt, dass das Polyethermakromonomer in dem Polymerisationsreaktor mit der Initiator, monomere Ausgangsstoffe sowie Copolymer enthaltenden Reaktionskomposition vermischt wird und dabei erstmals mit dem Säuremonomer in Kontakt gerät.

2. Verfahren nach Anspruch 1, **dadurch gekennzeichnet, dass** das Säuremonomer durch Polymerisation umgesetzt und dadurch eine Struktureinheit im Copolymer erzeugt wird, die gemäß einer der allgemeinen Formeln (Ia), (Ib), (Ic) und/oder (Id) ist 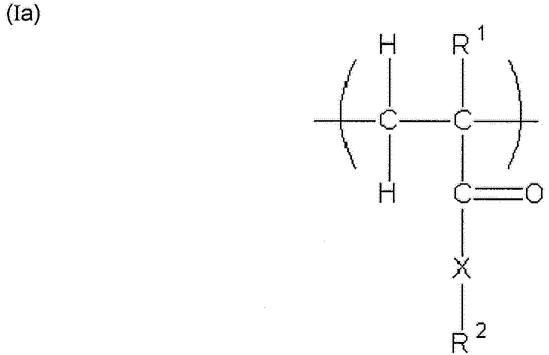 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch SO₃H, PO₃H₂, O-PO₃H₂ und/oder para substituiertes C₆H₄-SO₃H, oder falls X eine nicht vorhandene Einheit ist, R² durch OH repräsentiert wird; 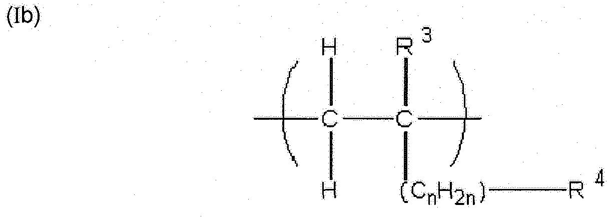
mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 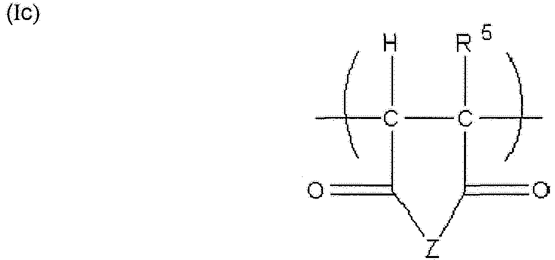
mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 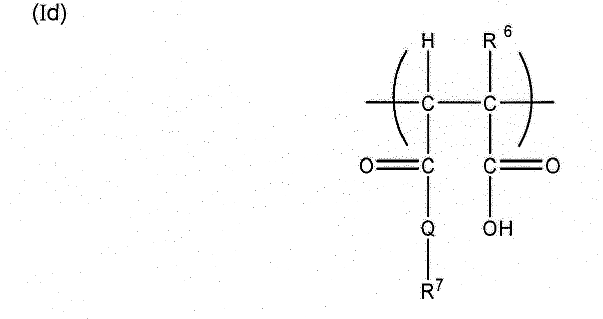
mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₅H₄)-PO₃H₂, (C₆H₄)-OPO₃H₂ und/oder (CₘH₂ₘ)ₑ-O-(A'O)_{α}-R⁹ mit m = 0, 1, 2, 3 oder 4, e = 0, 1, 2, 3 oder 4, A' = C_{x'}H_{2x'} mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

3. Verfahren nach Anspruch 1 oder 2, **dadurch gekennzeichnet, dass** als Säuremonomer Methacrylsäure, Acrylsäure, Maleinsäure, Maleinsäureanhydrid, ein Halbester der Maleinsäure oder eine Mischung aus mehreren dieser Komponenten eingesetzt wird.

4. Verfahren nach einem der Ansprüche 1 bis 3, **dadurch gekennzeichnet, dass** das Polyethermakromonomer durch Polymerisation umgesetzt und dadurch eine Struktureinheit im Copolymer erzeugt wird, die gemäß einer der allgemeinen Formeln (IIa), (IIb) und/oder (IIc) ist 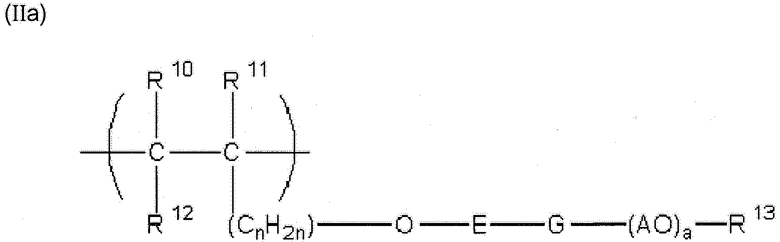 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350 (bevorzugt 10 - 200);
R¹³ gleich oder verschieden sowie repräsentiert durch H, eine unverzweigte oder verzweigte C₁ - C₄ Alkylgruppe, CO-NH₂, und/oder COCH₃; 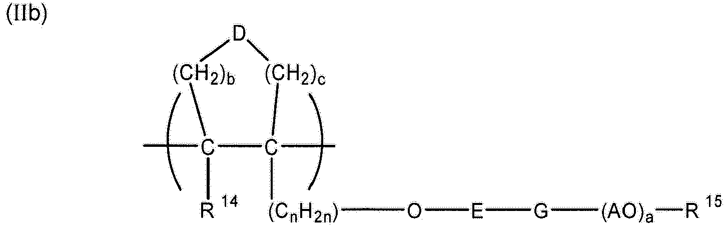
mit
R¹⁴ gleich oder verschieden sowie repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nichtvorhandene Einheit;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5
a gleich oder verschieden sowie repräsentiert durch eine ganze Zahl von 2 bis 350;
D gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und mit der Maßgabe dass wenn D NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃; 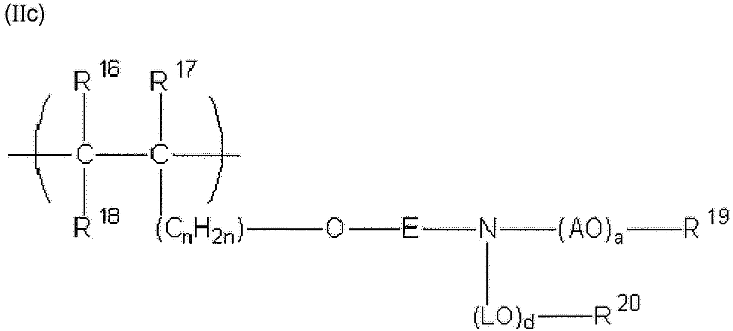
mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nicht vorhandene Einheit;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆-H₅);
a gleich oder verschieden sowie repräsentiert durch eine ganze Zahl von 2 bis 350;
d gleich oder verschieden sowie repräsentiert durch eine ganze Zahl von 1 bis 350;
R¹⁹ gleich oder verschieden sowie repräsentiert durch H und/oder eine unverzweigte oder verzweigte C₁ - C₄ Alkylgruppe,
R²⁰ gleich oder verschieden sowie repräsentiert durch H und/oder eine unverzweigte C₁ - C₄ Alkylgruppe.

5. Verfahren nach einem der Ansprüche 1 bis 4, **dadurch gekennzeichnet, dass** als Polyethermakromonomer alkoxyliertes Isoprenol und/oder alkoxylierter Hydroxybutylvinylether und/oder alkoxylierter (Meth)allylalkohol mit bevorzugt jeweils einer arithmetisch mittleren Zahl an Oxyalkylengruppen von 4 bis 350 eingesetzt wird.

6. Verfahren nach einem der Ansprüche 1 bis 5, **dadurch gekennzeichnet, dass** als monomerer Ausgangsstoff eine vinylisch ungesättigte Verbindung in den Polymerisationsreaktor eingeleitet wird, welche durch Polymerisation umgesetzt wird und dadurch eine Struktureinheit im Copolymer erzeugt wird, die gemäß der allgemeinen Formeln (IIIa) und/oder (IIIb) vorliegt 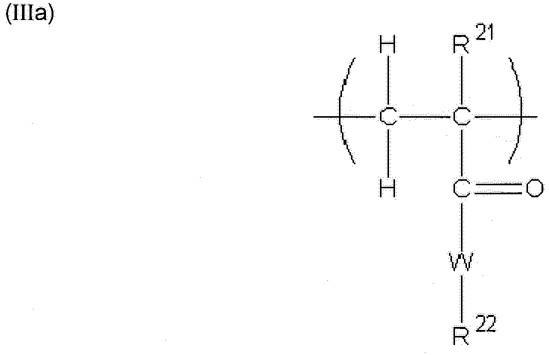 mit
mit R²¹ gleich oder verschieden sowie repräsentiert durch H und/oder eine unverzweigte oder verzweigte C₁ - C₄ Gruppe;
W gleich oder verschieden sowie repräsentiert durch O und/oder NH;
R²² gleich oder verschieden sowie repräsentiert durch eine verzweigte oder unverzweigte C₁ - C₅-Monohydoxyalkylgruppe; 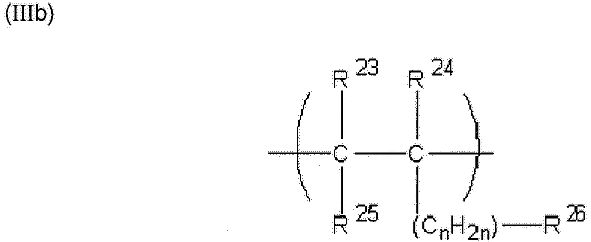
mit
R²³, R²⁴ und R² jeweils gleich oder verschieden sowie jeweils unabhängig repräsentiert durch H und/oder eine unverzweigte oder verzweigte C₁ - C₄ Alkylgruppe;
n gleich oder verschieden sowie repräsentiert durch 0, 1, 2, 3 und/oder 4;
R²⁶ gleich oder verschieden sowie repräsentiert durch (C₆H₅), OH und/oder -COCH₃.

7. Verfahren nach einem der Ansprüche 1 bis 6, **dadurch gekennzeichnet, dass** als radikalische Polymerisationsinitiator ein Redoxinitiator eingesetzt wird.

8. Verfahren nach Anspruch 7, **dadurch gekennzeichnet, dass** als Redoxinitiator das System H₂O₂/FeSO₄ gewählt wird, welches zusammen mit einem Reduktionsmittel eingesetzt wird.

9. Verfahren nach Anspruch 8, **dadurch gekennzeichnet, dass** als Reduktionsmittel Natriumsulfit, das Dinatriumsalz der 2-Hydroxy-2-sulfinatoessigsäure, das Dinatriumsalz der 2-Hydroxy-2-sulfonatoessigsäure, Natriumhydroxymethansulfinat, Ascorbinsäure, Iso-Ascorbinsäure oder Mischungen davon, eingesetzt werden.

10. Verfahren nach einem der Ansprüche 1 bis 9, **dadurch gekennzeichnet, dass** soviel Polyethermakromonomer pro Mol Säuremonomer in den Polymerisationsreaktor eingeleitet wird, dass sich im gebildeten Copolymer ein arithmetisch mittleres molares Verhältnis von Säuremonomerstruktureinheiten zu Polyethermakromonomerstruktureinheiten von 20:1 bis 1:1, bevorzugt von 12:1 bis 1:1 einstellt.

11. Verfahren nach einem der Ansprüche 1 bis 10, **dadurch gekennzeichnet, dass** insgesamt mindestens 45 Mol %, bevorzugt jedoch mindestens 80 Mol % aller Struktureinheiten des Copolymers durch Polymerisation von Säuremonomer und Polyethermakromonomer erzeugt werden.

12. Verfahren nach einem der Ansprüche 1 bis 11, **dadurch gekennzeichnet, dass** ein Kettenregler, welcher bevorzugt in gelöster Form vorliegt, in den Polymerisationsreaktor eingeleitet wird.

13. Verfahren nach einem der Ansprüche 1 bis 12, **dadurch gekennzeichnet, dass** die monomeren Ausgangsstoffe und/oder der Initiator in Form ihrer wässrigen Lösungen in den Polymerisationsreaktor eingeleitet werden.

14. Verfahren nach einem der Ansprüche 1 bis 13, **dadurch gekennzeichnet, dass** der Polymerisationsreaktor als kontinuierlich betriebener Rührkessel vorliegt.

15. Verfahren nach einem der Ansprüche 1 bis 14, **dadurch gekennzeichnet, dass** die Polymerisationseinrichtung noch mindestens einen dem Polymerisationsreaktor nachgeschalteten, kontinuierlich betriebenen Reaktor aufweist, in welchem über den Abfluss des Polymerisationsreaktors die Copolymer enthaltende Reaktionskomposition eingeleitet wird.

16. Verfahren nach Anspruch 15, **dadurch gekennzeichnet, dass** in den nachgeschalteten Reaktor monomere Ausgangsstoffe und/oder Initiatorkomponenten eingeleitet werden.

## Claims

1. Process for the preparation of a copolymer in a continuous mode of operation in a polymerization apparatus, comprising a polymerization reactor having feed lines and an outflow, free radical polymerization initiator, an acid monomer and polyether macromonomer being passed as monomeric starting materials into the polymerization reactor through the feed lines, initiator, monomeric starting materials and copolymer-containing reaction composition thermostated at -20 to +120°C being present in the polymerization reactor, copolymer-containing reaction composition being discharged from the polymerization reactor through the outflow, the introduction of the polyether macromonomer into the polymerization reactor being effected separately from the acid monomer in a manner such that the polyether macromonomer is mixed with the initiator, monomeric starting materials and copolymer-containing reaction composition in the polymerization reactor and comes into contact with the acid monomer for the first time thereby.

2. Process according to Claim 1, **characterized in that** the acid monomer is reacted by polymerization and a structural unit is produced thereby in the copolymer, which structural unit is according to one of the general formulae (Ia), (Ib), (Ic) and/or (Id) 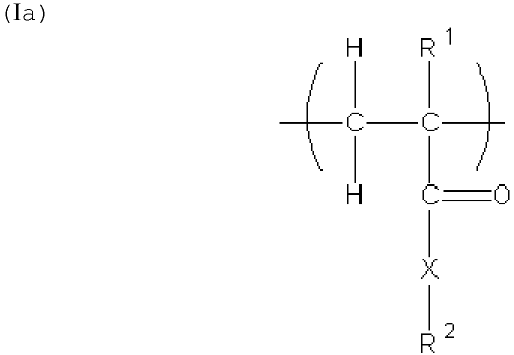 where
R¹ is identical or different and is represented by H and/or a straight-chain or branched C₁ - C₄ alkyl group;
X is identical or different and is represented by NH-(CₙH₂ₙ) where n = 1, 2, 3 or 4 and/or O-(CₙH₂ₙ) where n = 1, 2, 3 or 4 and/or by a unit not present;
R² is identical or different and is represented by SO₃H, PO₃H₂, O-PO₃H₂ and/or para-substituted C₆H₄-SO₃H, or if X is a unit not present, R² is represented by OH; 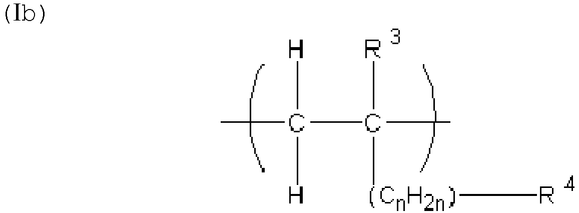
where
R³ is identical or different and is represented by H and/or a straight-chain or branched C₁-C₄ alkyl group;
n = 0, 1, 2, 3 or 4;
R⁴ is identical or different and is represented by SO₃H, PO₃H₂, O-PO₃H₂ and/or C₆H₄-SO₃H present in the para-substituted form; 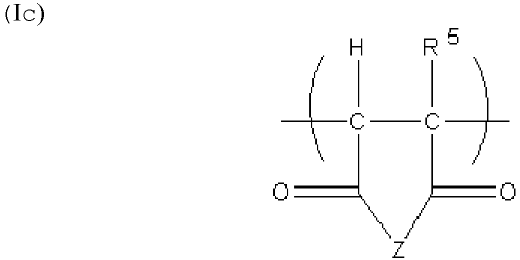
where
R⁵ is identical or different and is represented by H and/or a straight-chain or branched C₁-C₄ alkyl group;
Z is identical or different and is represented by O and/or NH; 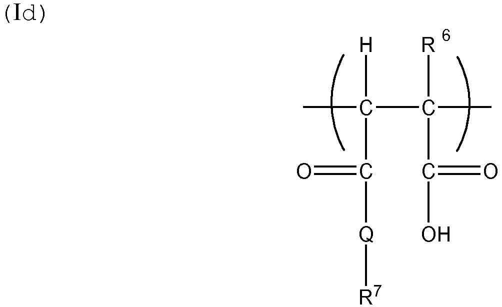
where
R⁶ is identical or different and is represented by H and/or a straight-chain or branched C₁-C₄ alkyl group;
Q is identical or different and is represented by NH and/or O;
R⁷ is identical or different and is represented by H, (CₙH₂ₙ)-SO₃H where n = 0, 1, 2, 3 or 4, (CₙH₂ₙ) -OH where n = 0, 1, 2, 3 or 4; (CₙH₂ₙ)-PO₃H₂ where n = 0, 1, 2, 3 or 4, (CₙH₂ₙ)-OPO₃H₂ where n= 0, 1, 2, 3 or 4, (C₆H₄)-SO₃H, (C₆H₄)-PO₃H₂, (C₆H₄) -OPO₃H₂ and/or (CₘH₂ₘ)ₑ-O-(A'O)_{α}-R⁹ where m = 0, 1, 2, 3 or 4, e = 0, 1, 2, 3 or 4, A' = C_{x'}H_{2x'} where x' = 2, 3, 4 or 5 and/or CH₂C(C₆H₅)H-, α= an integer from 1 to 350 with R⁹ being identical or different and being represented by a straight-chain or branched C₁-C₄ alkyl group.

3. Process according to Claim 1 or 2, **characterized in that** the acid monomer used is methacrylic acid, acrylic acid, maleic acid, maleic anhydride, a monoester of maleic acid or a mixture of a plurality of these components.

4. Process according to any of Claims 1 to 3, **characterized in that** the polyether macromonomer is reacted by polymerization and a structural unit is produced thereby in the copolymer, which structural unit is according to the general formulae (IIa), (IIb) and/or (IIc) 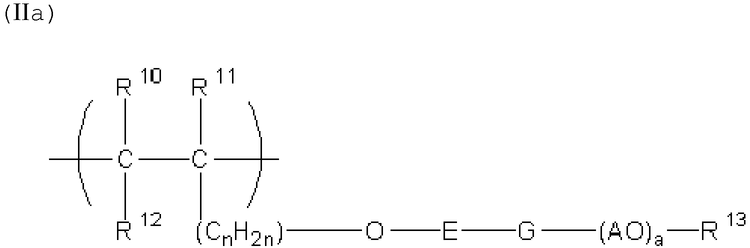 where
R¹⁰, R¹¹ and R¹² in each case are identical or different and, independently of one another, are represented by H and/or a straight-chain or branched C₁-C₄ alkyl group;
E is identical or different and is represented by a straight-chain or branched C₁-C₆ alkylene group, a cyclohexyl group, CH₂-C₆H₁₀, C₆H₄ present in ortho-, meta- or para-substituted form and/or a unit not present;
G is identical or different and is represented by O, NH and/or CO-NH, with the proviso that, if E is a unit not present, G is also present as a unit not present;
A is identical or different and is represented by CₓH₂ₓ where x = 2, 3, 4 and/or 5 (preferably x = 2) and/or CH₂CH(C₆H₅) ;
n is identical or different and is represented by 0, 1, 2, 3, 4 and/or 5;
a is identical or different and is represented by an integer from 2 to 350 (preferably 10 - 200);
R¹³ is identical or different and is represented by H, a straight-chain or branched C₁-C₄ alkyl group, CO-NH₂, and/or COCH₃; 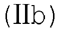 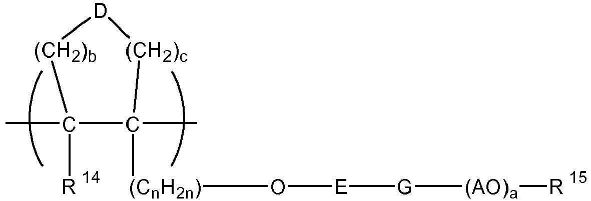
where
R¹⁴ is identical or different and is represented by H and/or a straight-chain or branched C₁-C₄ alkyl group;
E is identical or different and is represented by a straight-chain or branched C₁-C₆ alkylene group, a cyclohexyl group, CH₂-C₆H₁₀, C₆H₄ present in ortho-, meta- or para-substituted form and/or by a unit not present;
G is identical or different and is represented by a unit not present, O, NH and/or CO-NH, with the proviso that, if E is a unit not present, G is also present as a unit not present;
A is identical or different and is represented by CₓH₂ₓ where x = 2, 3, 4 and/or 5 and/or CH₂CH(C₆H₅) ;
n is identical or different and is represented by 0, 1, 2, 3, 4 and/or 5
a is identical or different and is represented by an integer from 2 to 350;
D is identical or different and is represented by a unit not present, NH and/or O, with the proviso that if D is a unit not present: b = 0, 1, 2, 3 or 4 and c = 0, 1, 2, 3 or 4, where b + c = 3 or 4, and
with the proviso that if D is NH and/or O: b = 0, 1, 2 or 3, c = 0, 1, 2 or 3, where b + c = 2 or 3;
R¹⁵ is identical or different and is represented by H, a straight-chain or branched C₁-C₄ alkyl group, CO-NH₂ and/or COCH₃; 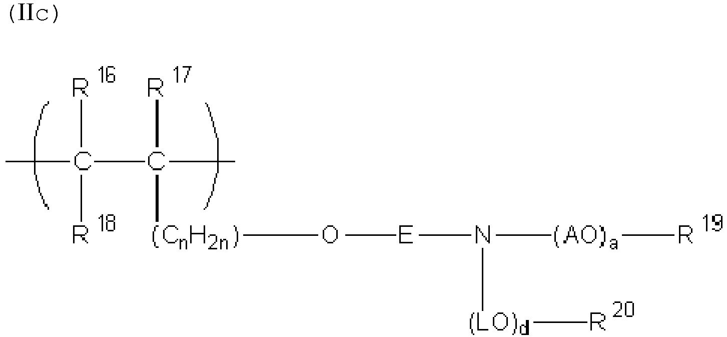
where
R¹⁶, R¹⁷ and R¹⁸ in each case are identical or different and, independently of one another, are represented by H and/or a straight-chain or branched C₁-C₄ alkyl group;
E is identical or different and is represented by a straight-chain or branched C₁-C₆ alkylene group, a cyclohexyl group, CH₂-C₆H₁₀, C₆H₄ present in ortho-, meta- or para-substituted form and/or by a unit not present;
A is identical or different and is represented by CₓH₂ₓ where x = 2, 3, 4 and/or 5 and/or CH₂CH(C₆H₅) ;
n is identical or different and is represented by 0, 1, 2, 3, 4 and/or 5;
L is identical or different and is representedy by CₓH₂ₓ where x = 2, 3, 4 and/or 5 and/or CH₂-CH(C₆-H₅) ;
a is identical or different and is represented by an integer from 2 to 350;
d is identical or different and is represented by an integer from 1 to 350;
R¹⁹ is identical or different and is represented by H and/or a straight-chain or branched C₁-C₄ alkyl group,
R²⁰ is identical or different and is represented by H and/or a straight-chain C₁-C₄ alkyl group.

5. Process according to any of Claims 1 to 4, **characterized in that** the polyether macromonomer used is alkoxylated isoprenol and/or alkoxylated hydroxybutyl vinyl ether and/or alkoxylated (meth)allyl alcohol having preferably in each case an arithmetic mean number of 4 to 350 oxyalkylene groups.

6. Process according to any of Claims 1 to 5, **characterized in that**, as monomeric starting material, a vinylically unsaturated compound is passed into the polymerization reactor and is reacted by polymerization, and a structural unit is produced thereby in the copolymer, which structural unit is present according to the general formulae (IIIa) and/or (IIIb) 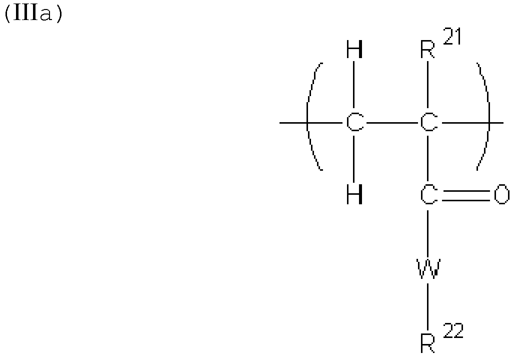 where
where R²¹ is identical or different and is represented by H and/or a straight-chain or branched C₁-C₄ group;
W is identical or different and is represented by O and/or NH;
R²² is identical or different and is represented by a branched or straight-chain C₁-C₅-monohydroxyalkyl group; 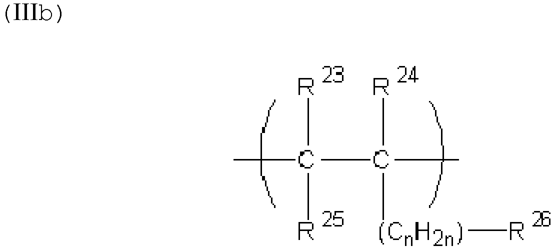
where
R²³, R²⁴ and R² in each case are identical or different and in each case, independently of one another, are represented by H and/or a straight-chain or branched C₁-C₄ alkyl group;
n is identical or different and is represented by 0, 1, 2, 3 and/or 4;
R²⁶ is identical or different and is represented by (C₆H₅), OH and/or -COCH₃.

7. Process according to any of Claims 1 to 6, **characterized in that** the free radical polymerization initiator used is a redox initiator.

8. Process according to Claim 7, **characterized in that** the system H₂O₂/FeSO₄, which is used together with a reducing agent, is chosen as the redox initiator.

9. Process according to Claim 8, **characterized in that** the reducing agent used is sodium sulphite, the disodium salt of 2-hydroxy-2-sulphinatoacetic acid, the disodium salt of 2-hydroxy-2-sulphonatoacetic acid, sodium hydroxymethanesulphinate, ascorbic acid, isoascorbic acid or mixtures thereof.

10. Process according to any of Claims 1 to 9, **characterized in that** polyether macromonomer is passed into the polymerization reactor in an amount per mole of acid monomer such that an arithmetic mean molar ratio of acid monomer structural units to polyether macromonomer structural units of 20:1 to 1:1, preferably of 12:1 to 1:1, is established in the copolymer formed.

11. Process according to any of Claims 1 to 10, **characterized in that** altogether at least 45 mol%, but preferably at least 80 mol%, of all structural units of the copolymer are produced by polymerization of acid monomer and polyether macromonomer.

12. Process according to any of Claims 1 to 11, **characterized in that** a chain regulator, which is preferably present in dissolved form, is passed into the polymerization reactor.

13. Process according to any of Claims 1 to 12, **characterized in that** the monomeric starting materials and/or the initiator are passed into the polymerization reactor in the form of their aqueous solutions.

14. Process according to any of Claims 1 to 13, **characterized in that** the polymerization reactor is present as a continuously operated stirred tank.

15. Process according to any of Claims 1 to 14, **characterized in that** the polymerization apparatus also comprises at least one continuously operated reactor which is downstream of the polymerization reactor and into which the copolymer-containing reaction composition is passed via the outflow of the polymerization reactor.

16. Process according to Claim 15, **characterized in that** monomeric starting materials and/or initiator components are passed into the downstream reactor.

## Revendications

1. Procédé de fabrication d'un copolymère en mode d'exploitation continu dans un appareil de polymérisation, contenant un réacteur de polymérisation comprenant des conduites d'alimentation et une sortie, selon lequel un initiateur de polymérisation radicalaire, ainsi qu'un monomère acide et un macromonomère de polyéther en tant que matières premières monomères sont introduits dans le réacteur de polymérisation par les conduites d'alimentation, une composition de réaction contenant l'initiateur, les matières premières monomères et le copolymère conditionnée à une température de -20 à +120 °C est présente dans le réacteur de polymérisation, la composition de réaction contenant le copolymère est déchargée du réacteur de polymérisation par la sortie, l'introduction du macromonomère de polyéther dans le réacteur de polymérisation ayant lieu séparément du monomère acide, de telle sorte que le macromonomère de polyéther soit mélangé dans le réacteur de polymérisation avec la composition de réaction contenant l'initiateur, les matières premières monomères et le copolymère, et ainsi mis en contact avec le monomère acide pour la première fois.

2. Procédé selon la revendication 1, **caractérisé en ce que** le monomère acide est transformé par polymérisation, et une unité structurale est ainsi formée dans le copolymère, qui est selon l'une des formules générales (Ia), (Ib), (Ic) et/ou (Id) 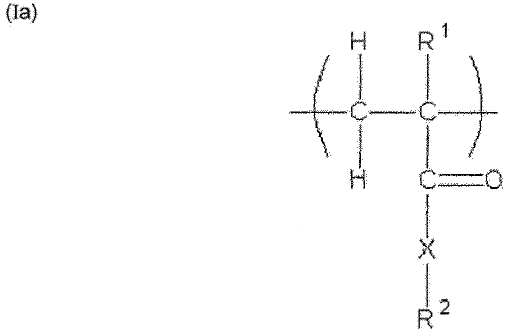 dans laquelle
les R¹ sont identiques ou différents, et représentés par H et/ou un groupe alkyle en C₁-C₄ non ramifié ou ramifié ; les X sont identiques ou différents, et représentés par NH-(CₙH₂ₙ) avec n = 1, 2, 3 ou 4, et/ou O-(CₙH₂ₙ) avec n = 1, 2, 3 ou 4, et/ou par une unité non présente ;
les R² sont identiques ou différents, et représentés par SO₃H, PO₃H₂, O-PO₃H₂ et/ou C₆H₄-SO₃H para-substitué ou, si X est une unité non présente, R² est représenté par OH ; 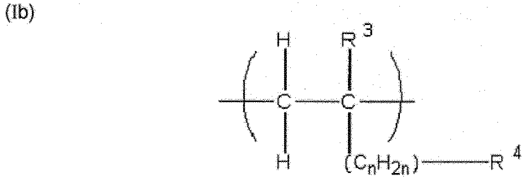
dans laquelle
les R³ sont identiques ou différents, et représentés par H et/ou un groupe alkyle en C₁-C₄ non ramifié ou ramifié ; n = 0, 1, 2, 3 ou 4,
les R⁴ sont identiques ou différents, et représentés par SO₃H, PO₃H₂, O-PO₃H₂ et/ou C₆H₄-SO₃H para-substitué ; 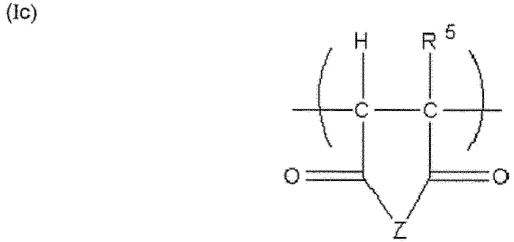
dans laquelle
les R⁵ sont identiques ou différents, et représentés par H et/ou un groupe alkyle en C₁-C₄ non ramifié ou ramifié ;
les Z sont identiques ou différents, et représentés par O et/ou NH ; 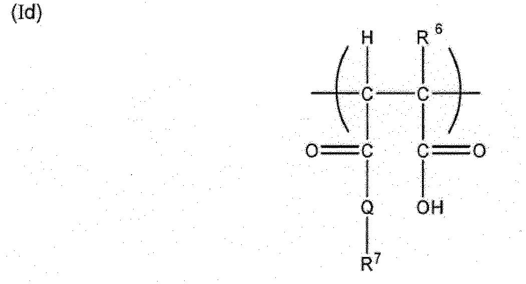
dans laquelle
les R⁶ sont identiques ou différents, et représentés par H et/ou un groupe alkyle en C₁-C₄ non ramifié ou ramifié ; les Q sont identiques ou différents, et représentés par NH et/ou O ;
les R⁷ sont identiques ou différents, et représentés par H, (CₙH₂ₙ)-SO₃H avec n = 0, 1, 2, 3 ou 4, (CₙH₂ₙ)-OH avec n = 0, 1, 2, 3 ou 4 ; (CₙH₂ₙ)-PO₃H₂ avec n = 0, 1, 2, 3 ou 4, (CₙH₂ₙ)-OPO₃H₂ avec n = 0, 1, 2, 3 ou 4, (C₆H₄)-SO₃H, (C₆H₄)-PO₃H₂, (C₆H₄)-OPO₃H₂ et/ou (CₘH₂ₘ)ₑ-O-(A'O)_{α}-R⁹ avec m = 0, 1, 2, 3 ou 4, e = 0, 1, 2, 3 ou 4, A' = C_{x'}H_{2x'} avec x' = 2, 3, 4 ou 5 et/ou CH₂C(C₆H₅)H-, α = un nombre entier de 1 à 350, les R⁹ étant identiques ou différents, et représentés par un groupe alkyle en C₁-C₄ non ramifié ou ramifié.

3. Procédé selon la revendication 1 ou 2, **caractérisé en ce que** l'acide méthacrylique, l'acide acrylique, l'acide maléique, l'anhydride de l'acide maléique, un semi-ester de l'acide maléique ou un mélange de plusieurs de ces composants est utilisé en tant que monomère acide.

4. Procédé selon l'une quelconque des revendications 1 à 3, **caractérisé en ce que** le macromonomère de polyéther est transformé par polymérisation, et une unité structurale est ainsi formée dans le copolymère, qui est selon l'une des formules générales (IIa), (IIb) et/ou (IIc) 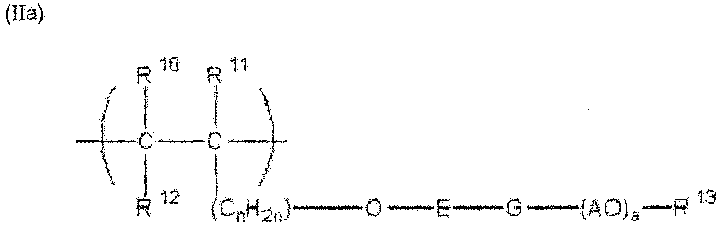 dans laquelle
les R¹⁰, R¹¹ et R¹² sont chacun identiques ou différents, et représentés indépendamment les uns des autres par H et/ou un groupe alkyle en C₁-C₄ non ramifié ou ramifié ; les E sont identiques ou différents, et représentés par un groupe alkylène en C₁-C₆ non ramifié ou ramifié, un groupe cyclohexyle, CH₂-C₆H₁₀, C₆H₄ ortho-, méta- ou para-substitué et/ou une unité non présente ;
les G sont identiques ou différents, et représentés par O, NH et/ou CO-NH, à condition que si E est une unité non présenté, G se présente également sous la forme d'une unité non présente ;
les A sont identiques ou différents, et représentés par CₓH₂ₓ avec x = 2, 3, 4 et/ou 5 (de préférence x = 2) et/ou CH₂CH(C₆H₅) ;
les n sont identiques ou différents, et représentés par 0, 1, 2, 3, 4 et/ou 5 ;
les a sont identiques ou différents, et représentés par un nombre entier de 2 à 350 (de préférence 10 à 200) ; les R¹³ sont identiques ou différents, et représentés par H, un groupe alkyle en C₁-C₄ non ramifié ou ramifié, CO-NH₂ et/ou COCH₃ ; 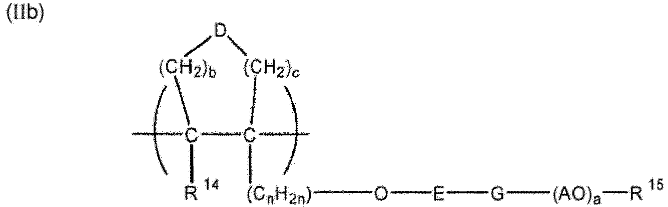
dans laquelle
les R¹⁴ sont identiques ou différents, et représentés par H et/ou un groupe alkyle en C₁-C₄ non ramifié ou ramifié ; les E sont identiques ou différents, et représentés par un groupe alkylène en C₁-C₆ non ramifié ou ramifié, un groupe cyclohexyle, CH₂-C₆H₁₀, C₆H₄ ortho-, méta- ou para-substitué et/ou par une unité non présente ;
les G sont identiques ou différents, et représentés par une unité non présente, O, NH et/ou CO-NH, à condition que si E est une unité non présente, G se présente également sous la forme d'une unité non présente ;
les A sont identiques ou différents, et représentés par CₓH₂ₓ avec x = 2, 3, 4 et/ou 5, et/ou CH₂CH(C₆H₅) ;
les n sont identiques ou différents, et représentés par 0, 1, 2, 3, 4 et/ou 5 ;
les a sont identiques ou différents, et représentés par un nombre entier de 2 à 350 ;
les D sont identiques ou différents, et représentés par une unité non présente, NH et/ou O, à condition que si D est une unité non présente : b = 0, 1, 2, 3 ou 4, et c = 0, 1, 2, 3 ou 4, avec b + c = 3 ou 4, et à condition que lorsque D est NH et/ou O : b = 0, 1, 2 ou 3, c = 0, 1, 2 ou 3, avec b + c = 2 ou 3 ;
les R¹⁵ sont identiques ou différents, et représentés par H, un groupe alkyle en C₁-C₄ non ramifié ou ramifié, CO-NH₂ et/ou COCH₃ ; 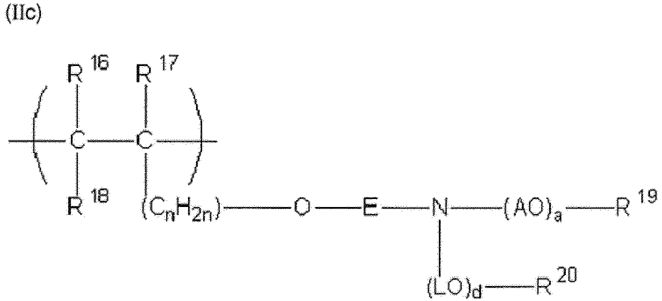
dans laquelle
les R¹⁶, R¹⁷ et R¹⁸ sont chacun identiques ou différents, et représentés indépendamment les uns des autres par H et/ou un groupe alkyle en C₁-C₄ non ramifié ou ramifié ; les E sont identiques ou différents, et représentés par un groupe alkylène en C₁-C₆ non ramifié ou ramifié, un groupe cyclohexyle, CH₂-C₆H₁₀, C₆H₄ ortho-, méta- ou para-substitué et/ou par une unité non présente ;
les A sont identiques ou différents, et représentés par CₓH₂ₓ avec x = 2, 3, 4 et/ou 5, et/ou CH₂CH(C₆H₅) ;
les n sont identiques ou différents, et représentés par 0, 1, 2, 3, 4 et/ou 5 ;
les L sont identiques ou différents, et représentés par CₓH₂ₓ avec x = 2, 3, 4 et/ou 5, et/ou CH₂-CH(C₆-H₅) ;
les a sont identiques ou différents, et représentés par un nombre entier de 2 à 350 ;
les d sont identiques ou différents, et représentés par un nombre entier de 1 à 350 ;
les R¹⁹ sont identiques ou différents, et représentés par H et/ou un groupe alkyle en C₁-C₄ non ramifié ou ramifié, les R²⁰ sont identiques ou différents, et représentés par H et/ou un groupe alkyle en C₁-C₄ non ramifié.

5. Procédé selon l'une quelconque des revendications 1 à 4, **caractérisé en ce qu'**un isoprénol alcoxylé et/ou un éther d'hydroxybutylvinyle alcoxylé et/ou un alcool (méth)allylique alcoxylé contenant de préférence chacun un nombre arithmétique moyen de groupes oxyalkylène de 4 à 350 est utilisé en tant que macromonomère de polyéther.

6. Procédé selon l'une quelconque des revendications 1 à 5, **caractérisé en ce qu'**un composé vinyliquement insaturé est introduit en tant que matière première monomère dans le réacteur de polymérisation, transformé par polymérisation, et une unité structurale est ainsi formée dans le copolymère, qui se présente selon les formules générales (IIIa) et/ou (IIIb) 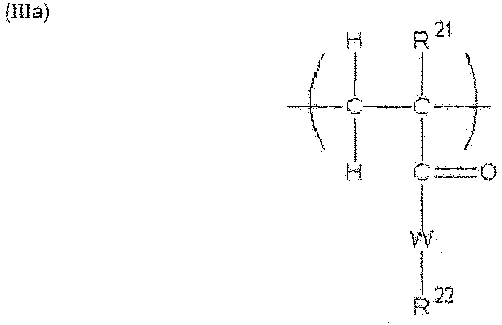 dans laquelle
dans laquelle les R²¹ sont identiques ou différents, et représentés par H et/ou un groupe alkyle en C₁-C₄ non ramifié ou ramifié ;
les W sont identiques ou différents, et représentés par O et/ou NH ;
les R²² sont identiques ou différents, et représentés par un groupe monohydroxyalkyle en C₁-C₅ ramifié ou non ramifié ; 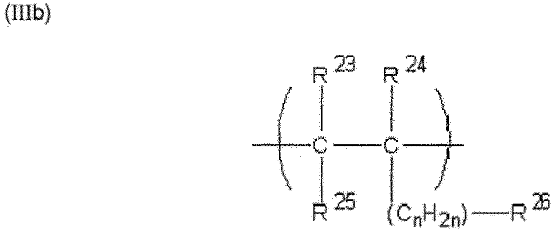
dans laquelle
les R²³, R²⁴ et R² sont chacun identiques ou différents, et chacun indépendamment représentés par H et/ou un groupe alkyle en C₁-C₄ non ramifié ou ramifié ;
les n sont identiques ou différents, et représentés par 0, 1, 2, 3 et/ou 4 ;
les R²⁶ sont identiques ou différents, et représentés par (C₆H₅), OH et/ou -COCH₃.

7. Procédé selon l'une quelconque des revendications 1 à 6, **caractérisé en ce qu'**un initiateur redox est utilisé en tant qu'initiateur de polymérisation radicalaire.

8. Procédé selon la revendication 7, **caractérisé en ce que** le système H₂O₂/FeSO₄ est choisi en tant qu'initiateur redox, qui est utilisé conjointement avec un réducteur.

9. Procédé selon la revendication 8, **caractérisé en ce que** le sulfite de sodium, le sel de disodium de l'acide 2-hydroxy-2-sulfinatoacétique, le sel de disodium de l'acide 2-hydroxy-2-sulfonatoacétique, l'hydroxyméthane-sulfinate de sodium, l'acide ascorbique, l'acide iso-ascorbique ou leurs mélanges sont utilisés en tant que réducteur.

10. Procédé selon l'une quelconque des revendications 1 à 9, **caractérisé en ce que** suffisamment de macromonomère de polyéther par mole de monomère acide est introduit dans le réacteur de polymérisation pour qu'un rapport molaire arithmétique moyen entre les unités structurales du monomère acide et les unités structurales du macromonomère de polyéther de 20:1 à 1:1, de préférence de 12:1 à 1:1, s'ajuste dans le copolymère formé.

11. Procédé selon l'une quelconque des revendications 1 à 10, **caractérisé en ce qu'**au total au moins 45 % en moles, de préférence toutefois au moins 80 % en moles, de toutes les unités structurales du copolymère sont formées par polymérisation du monomère acide et du macromonomère de polyéther.

12. Procédé selon l'une quelconque des revendications 1 à 11, **caractérisé en ce qu'**un régulateur de chaînes, qui se présente de préférence sous forme dissoute, est introduit dans le réacteur de polymérisation.

13. Procédé selon l'une quelconque des revendications 1 à 12, **caractérisé en ce que** les matières premières monomères et/ou l'initiateur sont introduits dans le réacteur de polymérisation sous la forme de leurs solutions aqueuses.

14. Procédé selon l'une quelconque des revendications 1 à 13, **caractérisé en ce que** le réacteur de polymérisation se présente sous la forme d'une cuve agitée exploitée en continu.

15. Procédé selon l'une quelconque des revendications 1 à 14, **caractérisé en ce que** l'appareil de polymérisation comprend en outre au moins un réacteur exploité en continu raccordé en aval du réacteur de polymérisation, dans lequel la composition de réaction contenant le copolymère est introduite par la sortie du réacteur de polymérisation.

16. Procédé selon la revendication 15, **caractérisé en ce que** des matières premières monomères et/ou des composants initiateurs sont introduits dans le réacteur raccordé en aval.
